# EUROPEAN PATENT APPLICATION

(11) **EP 3 499 370 A1**
(43) Date of publication of application: **19.06.2019**
(21) Application number: 18210277.2
(22) Date of filing: 04.12.2018
(51) Int. Cl.: G06F 11/07, B60K 28/14, B60W 10/20, B60W 10/04, B60W 50/02, B60W 10/18

(54) **CONTROLLING THE OPERATION OF A VEHICLE**

(30) Priority: 05.12.2017 GB 201720266
(71) Applicant: TRW Limited, Solihull, West Midlands B90 4AX (GB)
(72) Inventor: KUDANOWSKI, Maciej, Solihull, West Midlands B93 9RA (GB)
(74) Representative: Barker Brettell LLP

(57) **Abstract**

A method of operation of an automotive vehicle control system of the kind which includes at least one downstream control subsystem having at least one actuator which modifies the longitudinal or lateral motion of the vehicle in response to received control signals from an upstream subsystem is provided. The method comprises: (a) transmitting in real time to the downstream control sub-system one or more control signals from the upstream, (b) determining that a fault has occurred upstream of the downstream control subsystem which causes the control signals to be erroneous, unreliable or unavailable to the downstream control system, and (c) thereafter using a response plan of action for the downstream subsystem that defines a sequence of operation of the at least one actuator of the down steam sub-system over a period of time and which has been previously stored in a local area of memory accessible to the downstream subsystem.

## Description

This invention relates to a method of controlling the operation of a vehicle in the event of a fault which causes the generation of unreliable control data, or a break in the supply of control data that is required by a control system of the vehicle. It in particular relates to a method of controlling an automated driving or partly automated driving vehicle in the event of a fault.

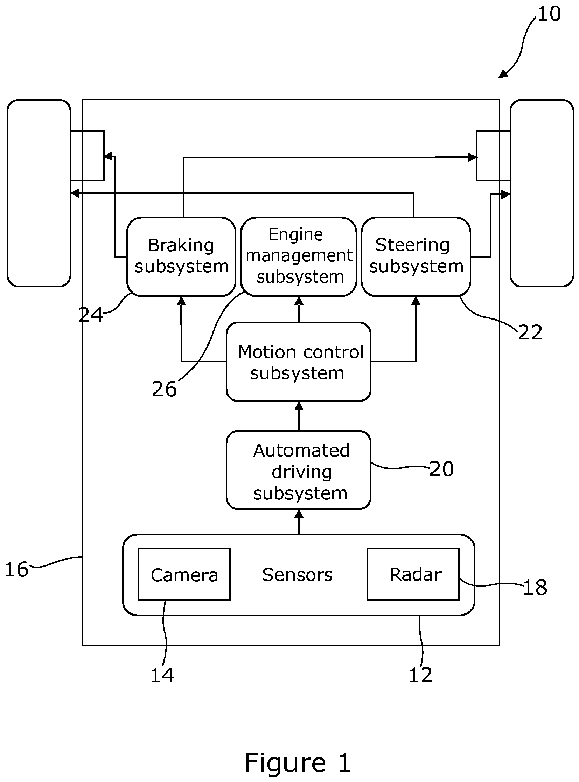

It is known to provide an automotive vehicle system that consists of a number of electronic control units that are connected together across a communication bus or busses. Each electronic control unit may receive signals from one or more sensors and may provide drive signals to one or more actuators. The combination of an electronic control unit and at least one actuator is referred to in this specification as a control subsystem. This arrangement is shown schematically in Figure 1 of the accompanying drawings, which depicts an automotive vehicle system 10. In the example shown, the sensors 12 are a camera 14 that views a highway ahead of and around a vehicle 16, and radar 18 which monitors the highway ahead of the vehicle 16. These sensors 12 feed signals into an automated driving subsystem 20 that outputs control signals for further subsystems to cause the vehicle 16 to drive safely along the highway. These further subsystems in the example of Figure 1, which receive these control signals, are a steering subsystem 22, a braking subsystem 24 and an engine management subsystem 26.

In use, the automated driving subsystem 20 generates control signals that are fed to the downstream control subsystems 22, 24, 26 to control the longitudinal and lateral motion of the vehicle 16, taking control of the driving away from a human driver. This automated mode may be operational all the time, with the driver unable to override, or may operate only part of the time to give partial automation. For instance the automated mode of operation may be allowed to continue for a limited time before a driver intervenes, or only operational when certain environmental conditions or vehicle dynamic conditions are met. For instance, it may only operate below a certain vehicle speed or above a certain speed, or when the vehicle sensors 12 indicate that the vehicle 16 is on a multi-lane highway or a highway with a central dividing barrier. Where only partial automation is provided, the steering of the vehicle 16 may be controlled but not the acceleration or braking, or the acceleration or braking may be controlled but not the steering.

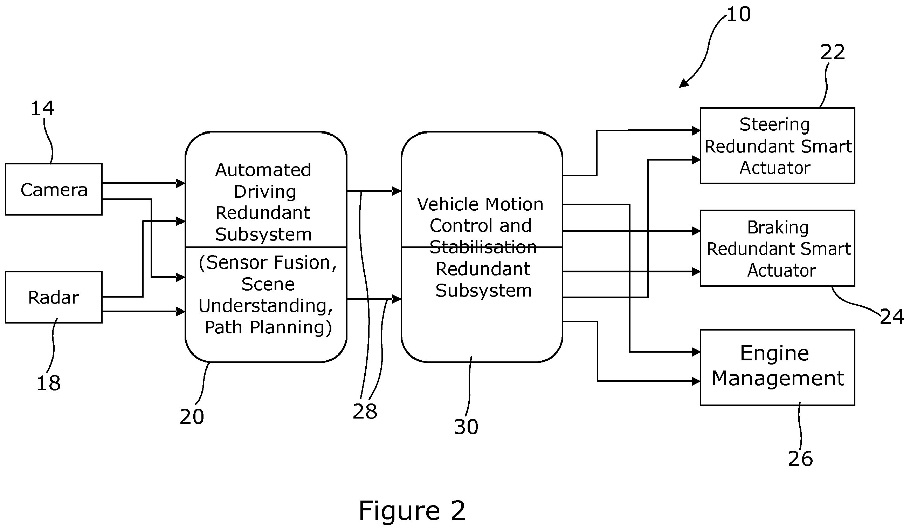

In the example of Figure 2, the vehicle dynamic control signals 28 output from the automated driving subsystem 20 are passed through a vehicle motion control and stabilisation subsystem 30 before being fed to the downstream subsystems 22, 24, 26. The function of the vehicle motion control and stabilisation subsystem 30 is to ensure the vehicle 16 remains stable at all times, and this may modify the control signals from the automated driving subsystem 20 if required. An example of a need to modify may be an event where the vehicle 16 moves onto a low-friction surface such that additional braking force is needed to achieve a given rate of deceleration.

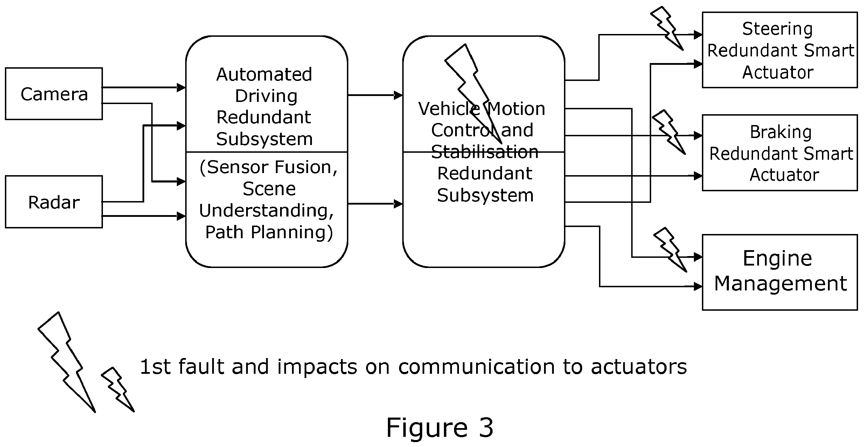

To ensure that the automotive vehicle system 10 can remain safe and functional in the event of a fault that impacts on the control signals fed to each of the downstream subsystems 22, 24, 26, which may cause an incorrect operation of an actuator and accordingly cause an incorrect change to the motion of the vehicle 16, each subsystem is mirrored so that there is inbuilt redundancy. The channels across which the control signals are sent are duplicated, as are the automated driving subsystem 20 and the vehicle motion control and stabilisation subsystem 30. Figure 3 shows how a fault in one part of the system, such as a primary vehicle motion control and stability subsystem, can be accommodated by switching to the backup subsystem and its backup control signal paths.

In the existing state of the art, once a single fault in a part of the system that has redundancy is detected the vehicle may continue to operate using the back-up part but will be put into a limp home mode where the performance of the vehicle is restricted. In the limp home mode the speed may be limited to a low level. In an alternative to a limp home mode, the autonomous control system may issue control signals that cause the vehicle to be brought safely to a stop, either in a straight line or if possible by moving the vehicle autonomously to the side of the road before stopping. This is known as a limp-aside mode.

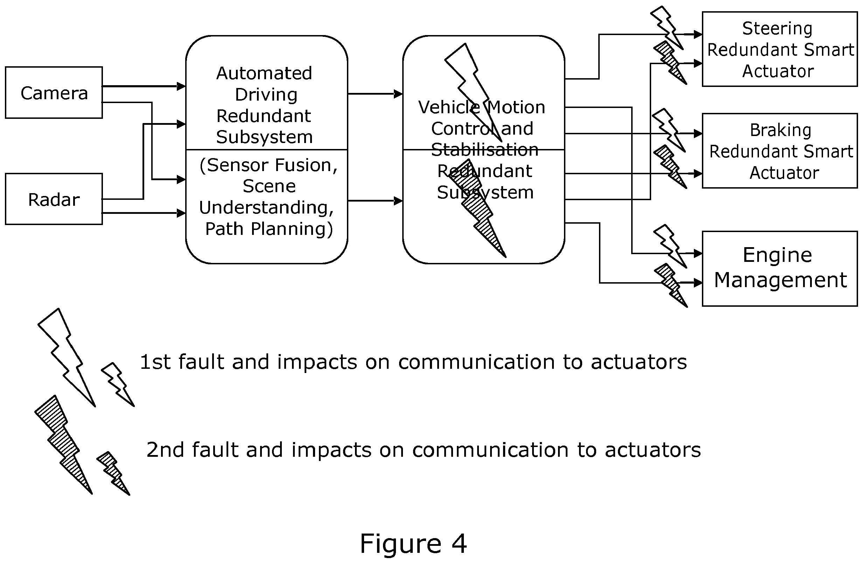

In both the case of a limp home mode and a limp aside mode, there remains a risk of loss of control of the vehicle- by a human driver or an autonomous or semi-automated driving system if a further fault occurs in the backup part of the system or if any of the control signals output from the automated control subsystem or the sensors that feed it develop a fault. A risk is also present if there is a fault that prevents the control signals reaching the subsystems, such as a fault on the vehicle communications bus. Figure 4 illustrates a case where there are faults in both the vehicle motion control and stabilization subsystem and its redundant backup. In this case, the downstream subsystems for steering, braking and acceleration receive no usable control signals or incorrect control signals, which would cause incorrect operation of the actuators and an incorrect motion of the vehicle. In the case shown in Figure 4, total loss of control of the actuators results.

An object of the present invention is to provide a method and apparatus that ameliorates some of the limitations in previous autonomous control systems with regards to safety in the event of a fault.

According to a first aspect the invention provides a method of operation of an automotive vehicle control system of the kind which includes at least one downstream control subsystem having at least one actuator which modifies the longitudinal or lateral motion of the vehicle in response to received control signals from an upstream subsystem, the method comprising:
(a) transmitting in real time to the downstream control sub-system one or more control signals from the upstream,
(b) determining that a fault has occurred upstream of the downstream control subsystem which cause the control signals to be erroneous, unreliable or unavailable to the downstream control system, and
(c) thereafter using a response plan of action for the downstream subsystem that defines a sequence of operation of the at least one actuator of the down steam sub-system over a period of time and which has been previously stored in a local area of memory accessible to the downstream subsystem.

The present invention allows a locally stored response plan to be used instead of control signals when a fault has occurred which may enable the vehicle to be safely brought to a stop.

The step (b) of determining that a fault has occurred may be performed by the downstream subsystem.

The method may comprise a step (d) of updating the stored response plan of action, or identifying an appropriate previously stored plan of action, or generating a new plan of action, in real time during normal operation of the vehicle. This step may be performed at a lower frequency than step (a). By updating in real time, the stored plan will always give an up to date and safe plan for stopping the vehicle from its current position independent of receiving control signals from upstream control subsystems. The ability to tailor the plan to the conditions and store it so it is always available for use when a fault occurs provides a high degree of safety for a range of operating conditions.

By generating a stored response plan of action for the subsystem in real time and prestoring this locally in a memory accessible to the subsystem it is possible for the actuator to be operated in accordance with the plan of action in the event of a fault upstream of the subsystem. As it is updated in real time the plan will always be one that is appropriate at the time it is to be used after a fault. The rate of checking may vary according to parameters such as a speed of the vehicle, with a higher speed being deemed more risky and requiring more frequent checks compared with a lower speed. The rate of checking may vary according to other parameters. On the other hand, the rate of checking may be fixed, for instance once every second.

The method may comprise generating a response plan of action for the subsystem which will cause the vehicle to carry out a safe manoeuvre; typically by bringing the vehicle safely to a halt after a fault is detected.

The response plan may comprise a set sequence of actions for the at least one actuator of the downstream subsystem in order to safely control the vehicle, or at least provide actions that are deemed to be safe in the absence of other information, after the control signals stop being received or are deemed unreliable due to a fault.

The downstream subsystem may comprise a braking system. The subsystem may comprise a steering system. The subsystem may comprise an engine management system.

The method may comprise carrying out steps (a) to (c) for more than one system.

Step (a) may be repeated continuously in real time, as this information is generally required to be updated regularly during operation of the subsystems, The step may be performed for instance every N millisecond, where N is an integer value greater than 1.

Step (b) may be repeated periodically or intermittently, to keep a watch for a fault having occurred. It may be performed less frequently than step (a). The rate of checking may vary according to parameters such as a speed of the vehicle, with a higher speed being deemed more risky and requiring more frequent checks compared with a lower speed. The rate of checking may vary according to other parameters. On the other hand, the rate of checking may be fixed, for instance once every second. The rate of checking for a fault does not need to be the same as the rate of updating the plan, or generating a new plan, and could be performed at a higher or lower rate.

Step (c) of using the response plan may be performed only after a failure has been detected in step (b).

The step of updating a stored response plan of action or generating a new plan of action could be performed repeatedly in real time but only once normal operation has resumed or prior to a fault.

This allows the response plan of action to be "pre-stored" so it is always up to date and ready to use.

By updating we mean the subsystem can access an appropriate updated plan at any time. The frequency of update will be dependent on the frequency at which the system can process information received from various sensors fitted to the vehicle.

In an alternative the method may comprise updating the response plan(s) only whenever a significant event has occurred that would justify an update. For example, if the vehicle is driving in a straight line down an empty highway that is straight, the plan may not be updated or only updated slowly. On the other hand, if the vehicle is in a bend or is close to other traffic it may be updated more often.

The method may comprise prior to determining that a fault has occurred operating the one or more actuators as a function of the transmitted control signals that are received by the sub-system. After a fault is determined these control signals may be disregarded.

The method may provide a separate plan for each subsystem. The plan of action for a braking system may therefore differ from that of a steering system, as the actuators of each must be operated in different ways. However, the separate plans together should define a plan of response which will bring the vehicle safely to a stop.

Alternatively, the method may comprise providing a single shared plan for two or more subsystems with each system responding to a relevant part of the single shared plan.

In the case of a subsystem which comprises a braking circuit the response plan of action or the relevant part of a shared response plan of action may comprise causing the brakes to be applied to bring the vehicle to a gradual stop.

In the case of a subsystem that comprises steering system, the response plan of action or the relevant part of a shared response plan of action may comprise causing the steering to move the vehicle safely to the side of a highway,

The method may comprise generating the plan of action for the subsystem, or for each subsystem, or the shared plan of action, by using a template and selecting a response plan of action from a set of pre-defined response plan of action templates, the selection of the template from the set depending on the motion of the vehicle and optionally information obtained from one sensors. Of course, it is possible to implement the invention with the use of templates.

For instance, one template may correspond to an action required to bring the vehicle to a stop in a straight line, and another template may correspond to an action required to cause the vehicle to steer into an adjacent line before stopping.

The method may comprise storing the predefined response plans of action in a memory local to each subsystem and the step of generating the response plan of action may comprise instructing the subsystem to select an appropriate template.

Alternatively, the method of generating the response plan of action for the subsystem may comprise selecting an appropriate response plan template and transmitting the selected response plan of action to the subsystem for storage in the local memory.

For optimum performance, the response plan of action may be updated in real time to take account of a range of operating conditions. For example, it may be updated to account for other vehicles around the vehicle, so that the path taken and time taken to stop avoids a collision with other vehicles. It may be updated to take account of the current highway conditions, for instance to steer around a bend that the vehicle is travelling around or approaching. It may be updated to account for the type of highway the vehicle is travelling along, for example steering across onto a hard shoulder where the highway is determined to have a hard shoulder. This information can be obtained from a camera or radar system or from mapping data, and more likely from a fusion of those types of signals. Of course, an automated driving system will already have an ability to perform some or all of this functionality and so has all the information and processing techniques needed to determine which response plan of action will give the best, safest, outcome for the current conditions.

According to a second aspect the invention an automotive vehicle control system of the kind comprising at least one downstream control subsystem having at least one actuator which modifies the longitudinal or lateral motion of the vehicle in response to received control signals from an upstream subsystem, the vehicle control system comprising:
(a) a control signal generating unit which in normal operation transmits control signals in real time to the downstream control sub-system,
(b) fault determining means that in use determines that a fault has occurred upstream of the subsystem which cause the control signals to be erroneous, unreliable or unavailable to the downstream control subsystem, and
(c) in which the downstream control subsystem is configured in the event that a fault is determined to operate the at least one actuator of the subsystem in accordance with a response plan of action for the downstream control subsystem which has been previously stored in a local area of memory accessible to the downstream subsystem, and in which upon a fault being determined the downstream control subsystem is arranged to control the at least one actuator in accordance with the response plan of action.

The fault determining means may comprise a part of the downstream subsystem, or may be provided locally to the downstream system so that it does not share a common communication line with the control signals which would otherwise represent a common point of failure. Where there are multiple downstream subsystems each may include a fault determining means.

The fault determining means may comprise a signal processing circuit. This may include a signal processor, a memory, a set of program instructions which are executed by the signal processor, and an input for receiving the control signals.

The system may include a response plan of action generating means which may comprise a part of the downstream subsystem. Alternatively the response plan of action generating means may be located upstream of the subsystem and may transmit the generated response plan of action to the subsystem for storage in the local area of memory.

This response plan of action generating means may include a signal processor, a memory, a set of program instructions which are executed by the signal processor, and an input for receiving the control signals. One or more of those components may be shared with the fault determining means.

The local area of memory in which a response plan of action is stored may form a part of the downstream subsystem. It may be located on a circuit board that is shared by a signal processing unit of the downstream subsystem.

By generating we may mean creating a new response plan of action, or updating an existing plan or selecting an appropriate plan that is pre-stored in the memory.

The response plan of action generating means may comprise a part of an automated driving control subsystem which further generates the control signals for the at least one subsystem in particular for controlling the acceleration or deceleration and the steering angle of the vehicle so as to achieve both longitudinal and lateral control of the vehicle. However, as noted above this may require separate line of communication to the downstream system from that used for the control signals to avoid a common fault that would cause a risk of loss of control of the vehicle.

The response plan of action generating means may generate a master response plan of action which determines a safe movement of the vehicle that brings it to a halt, and may supply this to each of a plurality of subsystems. Alternatively it may supply only the parts of the master plan that are needed by each subsystem For instance the braking part of the master plan may be passed to a braking subsystem, the steering part to the steering subsystem,

The master response plan of action generating means may generate a response plan by modifying or selecting one of a range of predefined response plans. These may include a stop dead ahead plan and a stop and move aside plan.

The response plan of action generating means may generate the response plan of action as a function of signals received from sensors fitted to the vehicle. These may include a positon sensor such as a GPS position sensor, a camera that captures an image of the scene at least to the front of the vehicle and a radar sensor that scans the scene ahead of the vehicle. It may also receive speed signals and yaw moment signals from respective speed and yaw sensors. It may receive signals from an accelerometer. Each subsystem may store a set of predefined response plans of action in a locally accessible area of memory, and the generating means may issue signals periodically to the subsystem telling the subsystem which response plan to select from the stored set to use as the current response plan of action. This uses less bandwidth compared with transmitting a complete response plan of action to the subsystem each time a new one is generated or an existing plan is updated.

For resilience, the step (b) should be performed by the downstream subsystem as this should be capable of determining by itself that there is a fault and using the pre-stored response plan. The downstream subsystem cannot be instructed once the fault has occurred as the fault may be in the communication between it and the upstream subsystem so this provides additional resilience against faults.

The downstream subsystem may comprise a braking subsystem that includes at least one brake actuator, a steering subsystem that includes at least one actuator that alters the steering angle of at least one road wheel of the vehicle, and an engine management subsystem that controls the engine of the vehicle and optionally the gearbox of the vehicle if fitted. By engine we may mean an internal combustion engine or an electric traction motor or a combination of the two. We may mean multiple electric traction motors.

There will now be described, by way of example only, one embodiment with reference to the accompanying drawings of which:
**Figure 1** is a schematic diagram of an automotive vehicle system including sensors and control subsystems;
**Figure 2** is schematic diagram of a typical prior art vehicle control system which includes some redundancy for safety;
**Figure 3** is a schematic diagram corresponding to Figure 2 showing the effect of a single fault;
**Figure 4** is a schematic diagram corresponding to Figure 2 showing the total loss of control of the vehicle when two faults have occurred;
**Figure 5** is a schematic diagram similar to Figure 2 for an embodiment of a vehicle control system in accordance with the present invention; and
**Figure 6** is an overview of a vehicle that includes the control system of Figure 5;
**Figure 7** is a detail view of a subsystem of the vehicle shown in Figure 6; and
**Figure 8** is an example scenario where the vehicle is driving along a busy highway showing how different templates for the response plan of action will be selected depending on the position of the vehicle relative to other vehicles.

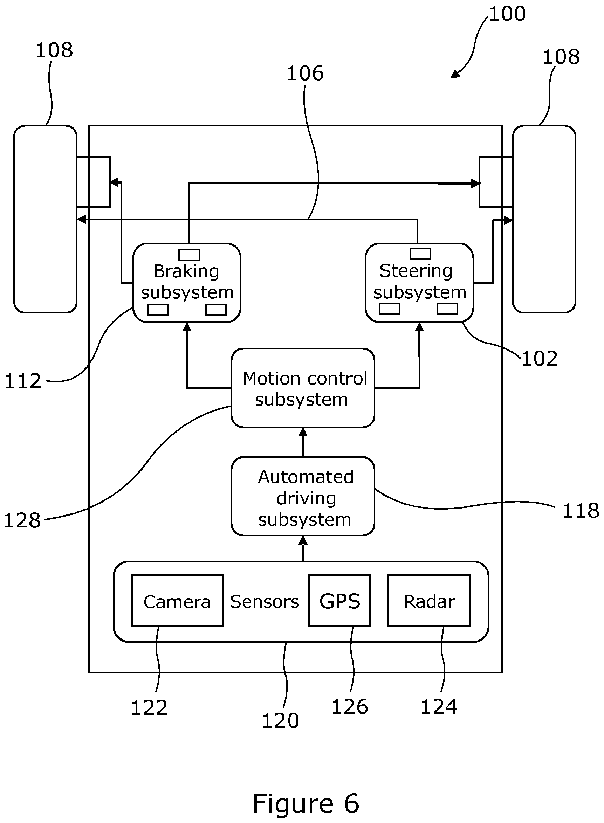

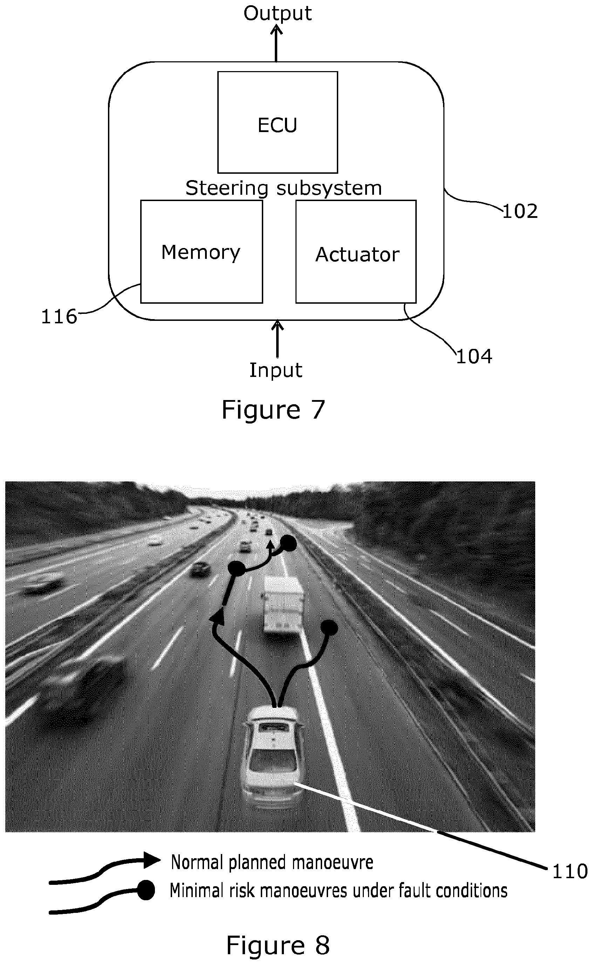

As shown in Figure 6, a vehicle control system 100 comprises two subsystems, each comprising a signal processing unit (ECU), and at least one actuator, detail of which can be seen in Figure 7.

The first subsystem, shown in detail in Figure 7, comprises a steering subsystem 102 and the actuator 104 comprises an electric motor which acts on a steering column or steering rack to control the angle of the road wheels of the vehicle. As shown in Figure 6, this applies a torque to a steering rack 106 through a belt drive (not shown) to turn the two front wheels 108 of a four wheel vehicle 110, in particular a passenger car. The signal processing unit receives control signals and drives the motor, in normal operation, in response to these control signals.

The second subsystem, comprises a braking subsystem 112 and the actuator comprises a hydraulic actuator which applies pressure to a set of brakes of the vehicle 110. This may, for instance, apply a braking force to all four wheels of the passenger car, split across two circuits as is known in the art for resilience. The signal processing unit receives control signals and modulates the pressure output from the hydraulic actuator, in normal operation, in response to these control signals.

Although Figure 7 depicts a steering subsystem, it is clear that the general arrangement of a subsystem including an ECU 114, actuator 104, and a memory 116 can equally be applied to any type of subsystem. The operation of the memory 116 is described below.

Upstream of the two subsystems is an automated driving subsystem 118. This subsystem receives information from a number of sensors 120 and other subsystems and from this calculates both a desired longitudinal and lateral motion of the vehicle 110, in effect driving the car independent from the driver or alongside inputs from the driver. The sensors in this example comprise a camera 122 and a radar sensor 124 fitted to the front of the vehicle 110 and observing the road ahead, and also a GPS position sensor 126. Other sensors may be used, with the signals being processed together by the automated driving subsystem 118. The output of the subsystem 118 is a set of raw control signals. These control signals are transmitted in real time, updated every 10 milliseconds or thereabouts.

The raw control signals define the desired motion of the vehicle 110, and these are fed to a motion control subsystem 128. This subsystem processes the raw control signals and generates specific control signals that are fed to each of the two downstream subsystems, the steering and braking subsystems.

The automated driving subsystem 118 also generates a response plan of action, which defines a set sequence of motions of the vehicle 110 that are to be carried out in the event of a fault that will bring the vehicle 110 to carry out a safe manoeuvre such as bringing the vehicle safely to a stop. The automated driving subsystem 118 also updates this plan, generating a fresh plan every 20 milliseconds or so, although it may be updated less often than this depending on operating conditions. To generate the response plan of action, the system of this embodiment will select an appropriate plan from a stored set of templates.

Figure 8 illustrates two simple templates, one for bringing the vehicle 110 to a halt in a straight line and the other causing the vehicle 110 to change lanes to an adjacent lane or hard shoulder and then stop. As can be seen, depending on the position of the vehicle 110 it is clear which one of the two templates to select for a safe stop. By using information from the camera and radar, the automated driving subsystem 118 will generate a plan using the most appropriate template in real time.

The generated plans are fed to the motion control subsystem 128 which in turn calculates a response plan of action for each downstream subsystem. These response plans of action are sent to the downstream subsystems whenever they are updated.

As mentioned previously, each subsystem also includes an area of memory 116 into which the response plan of action is stored, and to which an updated response plan of action is stored each time it is received by the subsystem.

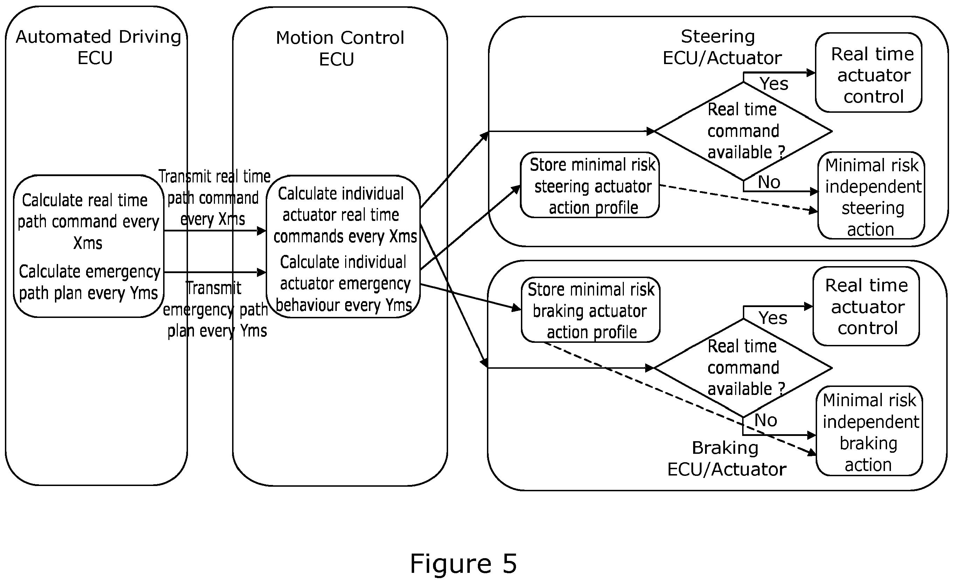

A method of operation of the vehicle control system of Figure 5 may be as follows. During normal operation the subsystem operates the actuators 104 in accordance with the received control signals from the upstream motion control subsystem 128. In the event of a fault, the subsystem will instead operate the actuators 104 in accordance with the stored response plan of action. This will enable the vehicle 110 to be brought safely to a halt.

In a modification, the templates may be stored in the local memory 116 of each subsystem and the automated driving subsystem 118, rather than generating and updating the plan of action, may simply select a template and send an instruction to the subsystem through the motion control subsystem 128 identifying which template to select from the memory 116. This may be beneficial where it is desirable to send less information across the vehicle control bus to the subsystems.

## Claims

1. A method of operation of an automotive vehicle control system of the kind which includes at least one downstream control subsystem having at least one actuator which modifies the longitudinal or lateral motion of the vehicle in response to received control signals from an upstream subsystem, the method comprising:
(a) transmitting in real time to the downstream control sub-system one or more control signals from the upstream,
(b) determining that a fault has occurred upstream of the downstream control subsystem which causes the control signals to be erroneous, unreliable or unavailable to the downstream control system, and
(c) thereafter using a response plan of action for the downstream subsystem that defines a sequence of operation of the at least one actuator of the down steam sub-system over a period of time and which has been previously stored in a local area of memory accessible to the downstream subsystem.

2. A method according to claim 1 which further comprises updating the stored response plan of action, or identifying an appropriate previously stored plan of action, or generating a new plan of action, during normal operation of the vehicle.

3. A method according to claim 1 or claim 2 in which the subsystem comprises one or more of a braking system, a steering system and an engine management system.

4. A method according to any preceding claim comprising repeating step (a) continuously and performing step (b) less frequently.

5. A method according to any preceding claim comprising generating a response plan of action for the subsystem, or for each subsystem, or a shared response plan of action, by selecting a response plan of action from a set of pre-defined response plan of action templates, the selection of the template from the set depending on the motion of the vehicle and optionally information obtained from one or more sensors.

6. A method according to claim 5 comprising storing the predefined response plans of action templates in a memory local to each downstream subsystem and the step of generating the response plan of action comprises instructing the downstream subsystem to select an appropriate template.

7. A method according to claim 5 in which the step of generating the response plan of action for the downstream subsystem comprises selecting an appropriate response plan template and transmitting the selected response plan of action to the downstream subsystem for storage in a local memory.

8. An automotive vehicle control system of the kind comprising at least one downstream control subsystem having at least one actuator which modifies the longitudinal or lateral motion of the vehicle in response to received control signals from an upstream subsystem, the vehicle control system comprising:
(a) a control signal generating unit which in normal operation transmits control signals in real time to the downstream control sub-system,
(b) fault determining means that in use determines that a fault has occurred upstream of the downstream control subsystem which cause the control signals to be erroneous, unreliable or unavailable to the downstream system, and
(c) in which the downstream control subsystem is configured in the event that a fault is determined to operate the at least one actuator of the subsystem in accordance with a response plan of action for the downstream subsystem which has been previously stored in a local area of memory accessible to the downstream subsystem.

9. An automotive vehicle control system according to claim 8 which includes a response plan of action generating means which comprises a part of the downstream subsystem.

10. An automotive vehicle control system according to claim 8 or claim 9 in which the local area of memory forms a part of the downstream control subsystem.
